# EUROPÄISCHE PATENTSCHRIFT

(11) **EP 0 813 366 B1**
(45) Veröffentlichungstag und Bekanntmachung des Hinweises auf die Patenterteilung: **06.05.1999**
(21) Anmeldenummer: 96903827.2
(22) Anmeldetag: 07.03.1996
(51) Int. Cl.: A21B 1/40, A21B 1/26

(54) **BACKOFEN**
BAKING OVEN
FOUR DE BOULANGERIE

(30) Priorität: 08.03.1995 AT 409/95
(43) Veröffentlichungstag der Anmeldung: 29.12.1997
(73) Patentinhaber: KÖNIG, Helmut, 8045 Graz (AT)
(72) Erfinder: KÖNIG, Helmut, 8045 Graz (AT)
(74) Vertreter: Wildhack, Helmut, Dr. Dipl.-Ing.
(86) Internationale Anmeldenummer: AT9600043
(87) Internationale Veröffentlichungsnummer: WO9627293

(56) Entgegenhaltungen:
- WO-A-90/06057
- DE-A- 3 216 008
- DE-A- 3 225 813
- US-A- 4 515 143

## Beschreibung

Die Erfindung bezieht sich auf einen Backofen mit einem Gehäuse mit einer Beschickungsöffnung zur Beschickung des Backraumes des Backofens mit Backgut, und mit einer Ausgabeöffnung zur Entnahme des fertiggebackenen Backgutes, welches im Backraum auf Backgutträgern in einer Backatmosphäre entlang einer im Gehäuse angeordneten Bahn geführt ist, die einen geschlossenen Kreislauf bildet, und wobei das Backgut entlang der Bahn mit Heißluft aus Öffnungen von Heißluftkanälen in wechselnder Richtung beblasen wird, welche die Bahn zumindest abschnittsweise begleiten, und wobei die Bahn zwei aufeinander folgende Zonen hat, in denen durch zwei Heizungen unterschiedliche Temperaturen einstellbar sind. Ein solcher Backofen ist aus der AT-B-390.549 bekannt.

Bekanntlich erfolgt beim Backen von Brot in den üblichen Formen das Einschießen in den Backofen in der Regel bei hoher Temperatur (etwa 240 bis 280°C). Durch dieses hohe Temperatumiveau bildet sich der Teigling nach einer Einwirkungszeit von etwa vier bis zehn Minuten zu seiner Endform aus. Nach dieser anfänglichen Anbackzeit wird die Energiezufuhr zum Backofen abgeschaltet, wodurch sich der Backraum je nach seinem Speichervermögen mehr oder weniger schnell auf eine Ausbacktemperatur von etwa 180 bis 200°C abkühlt. In dieser Phase des Ausbackens, die wesentlich länger ist als die Phase der bei hohem Temperaturniveau des Backraumes durchgeführten Beschickung, wird der Teigling durchgebacken. Insbesondere bei schweren Brotsorten erfolgt das Einschießen der Teiglinge auf heiße Herdplatten, die durch Abgabe ihrer Speicherwärme das hohe Temperaturniveau der Anbackphase unterstützen. Dies geschieht zumeist in Etagenbackofen, die durch Umluft (bewegte Atmosphäre) oder durch ein durch die Backplatten geleitetes Heizmedium (ruhende Backatmosphäre) beheizt werden. Bei weniger empfindlichen Brotsorten, die eine solche Unterstützung der Backatmosphäre nicht benötigen, werden die für die Kleingebäckproduktion üblichen Stikkenöfen mit bewegter oder ruhender Backatmosphäre verwendet.

Bei allen diesen Systemen muß nach der Beschickung das Temperaturniveau im Backofen auf das Ausbackniveau abgesenkt werden. Dies hat den Nachteil, daß nach Ausbacken einer Charge bei neuerlicher Beschickung erhebliche Wartezeiten dadurch entstehen, daß der Backofen leer und ohne Nutzung auf die Einschießtemperatur aufgeheizt werden muß. Dies ist in Anbetracht der relativ großen Temperaturdifferenz zwischen Einschießen und Ausbacken (260°C bzw. 180°C) auch bei Backöfen mit hoher Steigleistung nicht kurzfristig möglich. Unter Annahme einer Steigleistung von etwa 5°C/min bedingt die zuvor erwähnte Temperaturdiffernez von 80°C eine Wartezeit von 16 Minuten.

Eine solche Wartezeit ist auch bei sogenannten Durchlauföfen (Tunnelöfen) nicht vermieden, bei welchen für die Vorbackzone und die Ausbackzone gesonderte beheizte Zonen vorgesehen sind. Die Teiglinge durchlaufen diese Zonen auf einem Netzband, dessen Geschwindigkeit im Verhältnis zur Baulänge des Ofens die Backzeit fixiert. Der erwähnte Nachteil stellt sich ein bei einer Umstellung der Backzeit des Produktes. So muß z.B. ein Produkt mit kurzer Backzeit im Ofen völlig leergefahren werden, bevor die Geschwindigkeit des Netzbandes auf das Produkt mit längerer Backzeit reduziert werden kann. Die Leerlaufzeit bei Produktumstellung betragt daher in der Praxis die Backzeit des zuerst in den Ofen eingebrachten Produktes. Außerdem benötigen solche Tunnelöfen einen erheblichen Platz, der in kleinen und mittleren Bäckereien nicht überall und immer zur Verfügung steht.

Der letztere Nachteil ist bei dem Backofen der eingangs beschriebenen Art dadurch vermieden, daß die Teigstücke auf heiße Backplatten in einer Eingabestation aufgebracht werden, von der die Backplatten mittels eines Förderers in den Backraum eingebracht werden. Im Backraum sind zwei Stapel von Backplatten nebeneinander angeordnet, vor welchen der eine schrittweise nach oben, der andere schrittweise nach unten bewegt wird. Die neu eingebrachte Backplatte wird bei einem dieser Bewegungsschritte unter den aufwärtsbewegten Stapel geschoben, wobei zugleich die oberste Backplatte dieses Stapels an den abwärtsbewegten Stapel übergeben wird. Im Bereich der Einbringeöffnung ist eine gegenüber der nachfolgenden Ausbackzone durch Dichtklappen abgedichtete Dampfzone vorgesehen, welche eine Ofengare der Teigstücke bewirken soll. Im Anschluß an diese Garzone sind zuschaltbare elektrische Zusatzheizkörper im Kreislauf der durch ein Gebläse geförderten Heißluft vorgesehen, um im Backraum eine Zone erhöhter Temperatur zu Beginn des Backprozesses erzielen zu können. Eine solche Konstruktion löst zwar das Problem des geringen Grundflächenbedarfes durch die Stapelbauweise der Backgutträger und hat auch den Vorteil, daß die Backgutträger zur Neubelegung heiß aus dem Backofen herauskommen. Nur unvollkommen läßt sich mit dieser Konstruktion jedoch der Übergang von einer Backgutart auf eine andere lösen. insbesondere wenn die Backzeiten stark voneinander abweichen sollen.

Die Erfindung setzt sich zur Aufgabe, einen Produktwechsel mit unterschiedlichen Backzeiten und bzw. oder unterschiedlichen Backtemperaturen problemlos möglich zu machen, ohne den Backofen leerfahren zu müssen. Die Erfindung löst diese Aufgabe dadurch, daß an die beiden Heizungen Heißluftkanäle für zwei Heißluftkreisläufe zur Beblasung des Backgutes in alternierender Richtung angeschlossen sind, von denen der eine Heißluftkreislauf beiden Zonen zugeordnet ist, wogegen der andere Heißluftkreislauf nur der an die Beschickungsöffnung folgenden Zone zugeordnet und durch ein Ventilsystem auf Kurzschlußbetrieb umschaltbar ist. Zum Unterschied von der zuvor beschriebenen bekannten Konstruktion ist somit beim Erfindungsgegenstand der an die Beschickungsöffnung folgenden Vorbackzone ein eigener Heißluftkreislauf zugeordnet, der unabhängig vom anderen Heißluftkreislauf betätigbar ist. Bei einem solchen Backofen läßt sich somit die der Beschickungsstation folgende Vorbackzone in unterschiedlicher Weise beheizen: Einerseits läßt sich diese Zone beheizen über den ihr eigens zugeordneten Heizkreislauf. Dies geschieht, wenn diese Zone als Vorbackzone wirken soll. Hiebei wird dem Backgut in dieser Zone in der Regel eine heißere Luft zugeführt als beim folgenden Ausbacken. Anderseits läßt sich aber diese der Beschickungsöffnung folgende Zone auch über den anderen, dem restlichen Backraum zugeordneten Heißluftkreislauf beheizen. Geschieht dies durch Umschaltung der dieser Zone eigens zugeordneten Heizung auf Kurzschlußkreislauf, so wird diese ansonsten als Vorbackzone wirkende Zone in jener Weise beheizt, wie dies für die Ausbackzone der Fall ist. Sie bildet dann gleichsam eine Verlängerung der Ausbackzone. Diese Betriebsweise ist erforderlich, wenn ein bestimmtes Backgut auf den Backgutträgern die Backatmosphäre in der geschlossenen Bahn mehr als einmal durchlaufen soll. Für einen solchen Fall muß die Vorbackzone nach Passieren der letzten Teigstücke der gerade eingebrachten Charge möglichst rasch auf das Temperaturniveau der Ausbackzone, d.h. des restlichen Backraumes gebracht werden, um zu verhindern, daß die zuerst eingebrachten Teigstücke des betreffenden Backgutes erneut eine Vorbackzone erhöhten Temperaturniveaus durchlaufen. Die erwähnte Umstellung ist auch erfoderlich, wenn von einer Backgutsorte auf eine andere Backgutsorte übergegangen wird, welche eine im Vergleich zur erstgenannten Backgutsorte unterschiedliche Backzeit erfordert. Diese Backzeit kann bei der erfindungsgemäßen Vorrichtung problemlos durch Variation der Anzahl der Umläufe der Backgutträger im Backraum variiert werden.

Ist die Vorbackzone vom Backgut durchlaufen, so befindet sich das gesamte System während der Ausbackphase des Backgutes auf dem Temperaturniveau der Ausbackzone und das Backgut wird in mehreren Umlaufkreisläufen fertiggebacken. Der Heißluftkreislauf für die Vorbackzone, dessen Lufttemperatur in der Regel wesentlich höher ist als jene der Ausbackzone, ist währendessen neutralisiert und kurzgeschlossen. Die nötigen Umschaltungen besorgt das Ventilsystem, dessen Bauweise und Steuerung keine Probleme bereitet. Im Kurzschlußbetrieb wird die von der Heizung, welche dem Heißluftkreislauf für die Vorbackzone zugeordnet ist, erzeugte Wärme gespeichert, sodaß kein Energieverlust entsteht. Sobald ein neues Backgut in den Backofen eingebracht wird, wird das Ventilsystem für die Vorbackzone so betätigt, daß der Heißluftkreislauf für die Vorbackzone wieder mit der Vorbacktemperatur für diese Zone aktiv gemacht wird. Das Vorbacken der neu eingebrachten Charge erfolgt somit parallel zum Ausbacken der letzten Teilmenge der zuerst eingebrachten Charge, wobei. wie bereits erwähnt, die Temperatur der Vorbackzone in der Regel höher liegt, als die Temperatur der Ausbackzone. Es kann somit die jeweils nachfolgende Backgutcharge in den Backofen an der Beschickungsstation eingebracht werden, ohne daß eine völlige Entleerung des Backofens abgewartet werden muß. Somit ist durch das Ventilsystem ein zeitlich exakt bestimmbarer neuer Backprozeß startbar, wobei der Energiebedarf des neu eingebrachten Backgutes durch die gespeicherte Wärme, die in dem der Vorbackzone zugeordneten Heißluftkreislauf in der vorherigen Phase des Kurzschlußbetriebes aufgebaut wurde, abgedeckt wird.

Bei der zuvor beschriebenen bekannten Konstruktion, bei welcher eine elektrische Zusatzheizung für die der Beschickungsöffnung folgende Zone des Kreislaufes der Teigstücke im Backofen vorgesehen ist, läßt sich ein Betrieb, wie dies oben beschrieben wurde, nicht erzielen, da der dort vorhandenen elektrischen Zusatzheizung kein eigener Heißluftkreislauf zugeordnet ist und darüberhinaus die elektrische Zusatzheizung viel zu träge ist, um die Temperatur in der von ihr beheizten Zone des Backraumes rasch ändern zu können, wie dies beim Erfindungsgegenstand problemlos möglich ist.

Von Vorteil ist beim erfindungsgemäßen Backofen auch, daß die Backgutträger das Gehäuse des Backofens nicht verlassen müssen, oder nur kurzfristig zur Belegung bzw. Abgabe des Backgutes an einer Beschickungs- bzw. Entnahmestation. Dies hat zur Folge, daß die Backgutträger stets heiß bleiben und daß somit die Belegung des Backgutes auf die heißen Platten der Backgutträger erfolgen kann, deren Speicherwärme zum Anbackprozess ausgenützt wird.

Es wäre denkbar, im Rahmen der Erfindung zwei völlig getrennte Kanalsysteme für die beiden Heißluftkreisläufe vorzusehen. Bei einer solchen Ausführungsform müssen für die Vorbackzone für beide Heißluftkreisläufe Abschnitte der Heißluftkanäle vorgesehen sein, deren, z.B. düsenartige, Öffnungen in den von der Vorbackzone gebildeten Backraumabschnitt münden. Die Vorbackzone wird dann ständig von jenem Heißluftkreislauf mit Heißluft versorgt, welcher auch die Ausbackzone ständig bebläst. Dieser Heißluftkreislauf ist somit ständig wirksam. Der andere Heißluftkreislauf wird für die Vorbackzone dann aktiv, wenn diese Zone zum Vorbacken frisch eingebrachter Teigstücke verwendet werden soll, wird jedoch auf Kurzschlußbetrieb umgeschaltet, sobald die letzten Teigstücke dieser Backgutcharge die Vorbackzone verlassen haben und die früher als Vorbackzone wirksame Backraumzone nun als ein Teil der Ausbackzone wirken soll. Eine solche Konstruktion würde aber erhöhten konstruktiven Aufwand für die Heißluftkanäle bedeuten und hätte überdies den Nachteil, daß die Absaugverhältnisse nicht völlig zu kontrollieren wären, da ja im Bereich der Vorbackzone beim Betrieb als solche die beiden Heißluftströme der beiden Heißluftkreisläufe einander überlagern. Günstiger ist es daher gemäß einer bevorzugten Ausführungsform der Erfindung, wenn der beiden Zonen zugeordnete Heißluftkreislauf an die Heißluftkanäle der der Beschickungsöffnung folgenden Zone durch das Ventilsystem ankoppelbar ist. Das der Backraumzone, welche der Beschickungsöffnung folgt (Vorbackzone) zugeordnete Heißluftkanalsystem wird bei dieser Ausführungsform in zweierlei Weise mit Heißluft beschickt: Einerseits folgt die Versogung mit Heißluft von jener Heizung, welche der Vorbackzone zugeordnet ist, wenn diese Zone als Vorbackzone wirksam sein soll. Anderseits wird dieses Heißluftkanalsystem von dieser Heizung abgekoppelt und an die Heißluftkanäle der anderen Heizung angekoppelt, wenn die früher als Vorbackzone wirksame Backraumzone als Teil der Ausbackzone wirksam sein soll. In letzterem Fall wird die zuvor wirksame Heizung auf Kurzschlußbetrieb geschaltet. Die hiefür nötigen An- und Abkoppelungen besorgt das Ventilsystem, was ohne technische Schwierigkeiten durchführbar ist.

Der Wechsel der Beblasungsrichtung in den beiden Zonen läßt sich in einfacher Weise dadurch erzielen, daß die Backgutträger an für die beiden Beblasungsrichtungen vorgesehenen Düsen der Heißluftkanäle vorbeigeführt werden, welche Düsen für die beiden Beblasungsrichtungen relativ zueinander, gesehen in Bewegungsrichtung der Backgutträger, versetzt sind. Es kann jedoch auch die Anordnung so getroffen sein, daß den beiden Beblasungsrichtungen zugeordnete Düsen, gesehen in Umlaufrichtung der Backgutträger, an derselben Stelle angeordnet sind und über die Heißluftkanäle alternierend mit Heißluft beschickt werden. Die entsprechende Umsteuerung besorgt in an sich bekannter Weise ein Umsteuersystem. Hiefür ergibt sich eine besonders günstige Weiterbildung der Erfindung, die darin besteht, daß das Ventilsystem zumindest teilweise von dem Umsteuersystem zum Wechsel der Beblasungsrichtung gebildet ist. Dies reduziert den konstruktiven Aufwand.

Im Sinne der Erfindung ist es für einen Betrieb im erfindungsgemäßen Sinn lediglich erforderlich, daß für die beiden Zonen entsprechend leistungsfähige Heizungen zur Verfügung stehen. Vorzugsweise hat im Rahmen der Erfindung zumindest eine der beiden Heizungen eine einstellbare Heizleistung. Insbesondere gilt dies für die der Vorbackzone zugeordnete Heizung. Dadurch ist es in einfacher Weise möglich, die Vorbackzone nicht nur auf ein anderes Temperaturniveau als die restliche Zone des Backofens zu bringen, sondern auch die Temperatur der Vorbackzone auf einen gewünschten Wert einzustellen, entsprechend dem jeweils vorliegenden Backgut.

Die erwähnte Ankoppelung der Heißluftversorgung für die an die Beschickungsöffnung folgende Zone an die restliche Backraumzone läßt sich konstruktiv gemäß einer Weiterentwicklung der vorliegenden Erfindung in einfacher Weise dadurch realisieren, daß die Kanäle des Heißluftkreislaufes für die der Beschickungsöffnung folgende Zone anschließend an die Kanäle des Heißluftkreislaufes für die andere Zone angeordnet sind und an letztere Kanäle über Ventile anschließbar sind. In der Offenstellung dieser Ventile sind somit die Heißluftkanäle der beiden Zonen miteinander verbunden.

Gemäß einer besonders günstigen Ausführungsform der Erfindung weist das Ventilsystem durch zumindest einen Stellmotor schwenkbare Klappen auf, welche den Heißlufteinstrom von der Heizung in die Heißluftkanäle der der Beschickungsstation folgenden Zone freigeben oder absperren. Solche schwenkbare Klappen sind konstruktiv besonders einfach und in einfacher Weise zu bedienen. Ihre Verwendung ist daher günstiger als jene für andere Ventiltypen, z.B. Schieber- oder Plattenventile, obwohl auch solche Ventiltypen im Prinzip Verwendung finden könnten. Eine besonders günstige Konstruktion ergibt sich im Rahmen der Erfindung, wenn das Ventilsystem an den Einströmenden der Heißluftkanäle angeordnete schwenkbare Klappen aufweist, die in ihrer einen Endstellung den Luftzustrom in den benachbarten Heißluftkanal freigeben, in der anderen Endstellung absperren und einen Kurzschluß für die Heißluftzufuhr bilden, so daß die Heißluft unter Umgehung der Backgutträger zurück zur Heizung strömt. Wie bereits erwähnt, muß also die Heizung für die der Beschickungsöffnung folgende Zone (welche beim Einbringen eines neuen Backgutes als Vorbackzone wirkt) nicht abgeschaltet werden, sondem diese Heizung beschickt ihr Kanalsystem im Kurzschlußkreislauf, erzeugt also Speicherwärme, die gegebenenfalls in geeigneter Weise gespeichert werden kann.

Für die Heißluftversorgung der beiden Zonen bestehen ebenfalls Variationsmöglichkeiten. Die günstigste, weil flexibelste, Konstruktion sieht vor, für die beiden Zonen zur Gänze getrennte Heizkreisläufe vorzusehen, deren jeder also ein eigenes Heizregister und ein eigenes Gebläse aufweist. Im Rahmen der Erfindung kann jedoch in einzelnen Fällen eine Anordnung vorteilhaft sein, bei welcher die Heißluftkanäle der einzelnen Zonen an ein gemeinsames Heizregister mit Gebläse angeschlossen sind, wobei für jene Heißluftkanäle, welche zu der der Einbringeöffnung benachbarten Zone führen, eine Zusatzheizung vorgesehen ist, die auf Kurzschlußkreislauf umschaltbar ist. In diesem Fall wirkt das Gebläse für beide Heizkreisläufe gemeinsam.

Besondere Vorteile bietet die Erfindung für solche Konstruktionen von Backöfen, bei welchen die Bahn die Backgutträger in zwei nebeneinander angeordneten Stapeln führt, in deren einem, der Beschickungsstation folgenden Stapel, die Backgutträger nach oben angehoben werden, wogegen im anderen Stapel die Backgutträger abgesenkt werden, wobei diese Stapel an zwei einander gegenüberliegenden Seiten von vertikalen Heißluftkanälen begleitet sind, denen über das Ventilsystem Heißluft zugeführt wird, und wobei für den die Backgutträger anhebenden Stapel zumindest zwei voneinander getrennte Abschnitte der Heißluftkanäle übereinander angeordnet sind, für deren jeden gesonderte Zufuhr- und Ableitkanäle für die Luft vorhanden sind, in die das Ventilsystem eingebaut ist. Eine solche Bauweise ist äußerst platzsparend bezüglich des Grundflächenbedarfes.

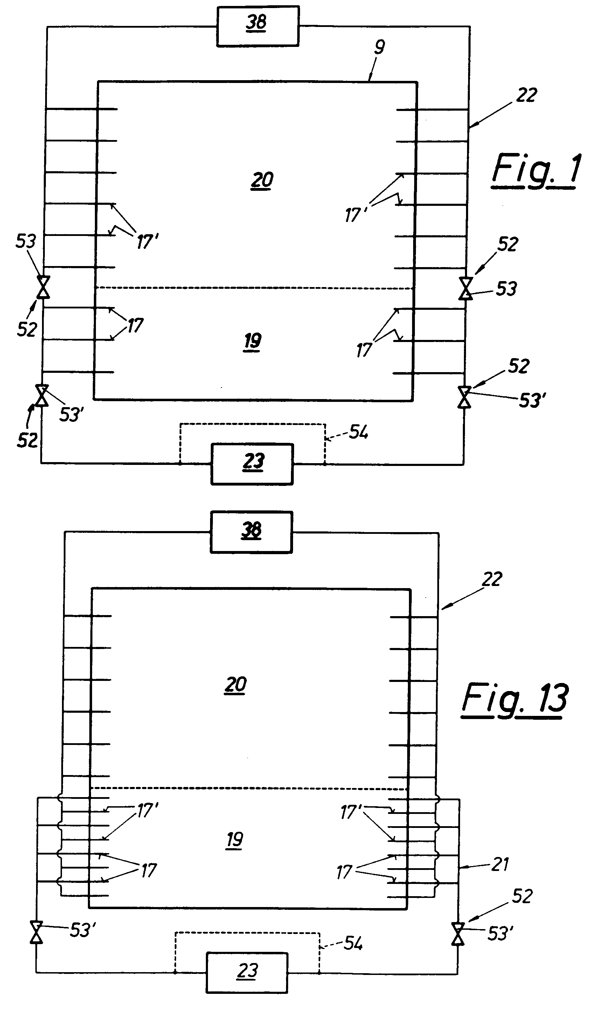

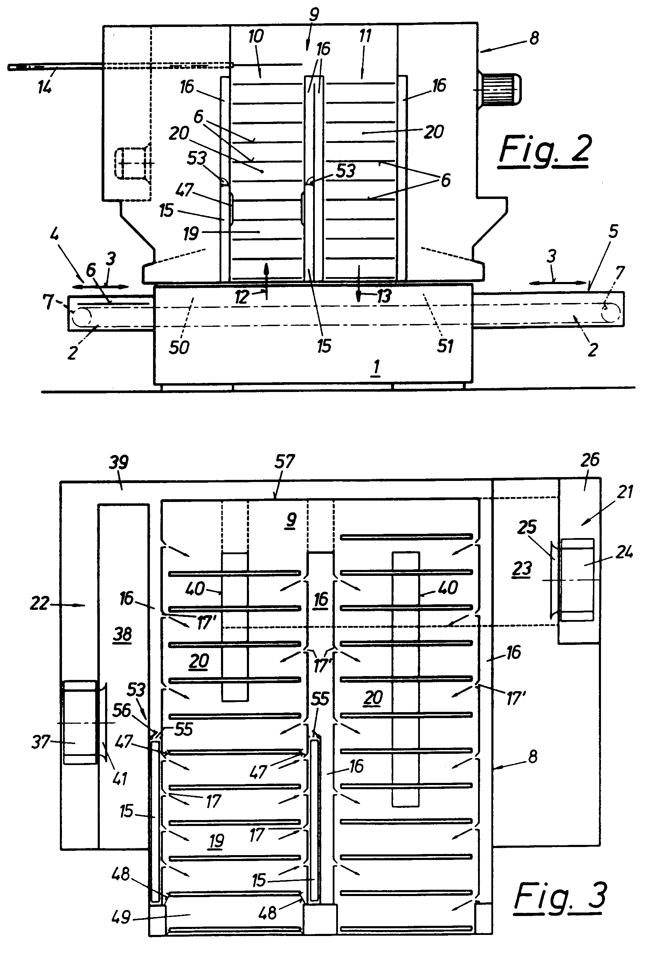

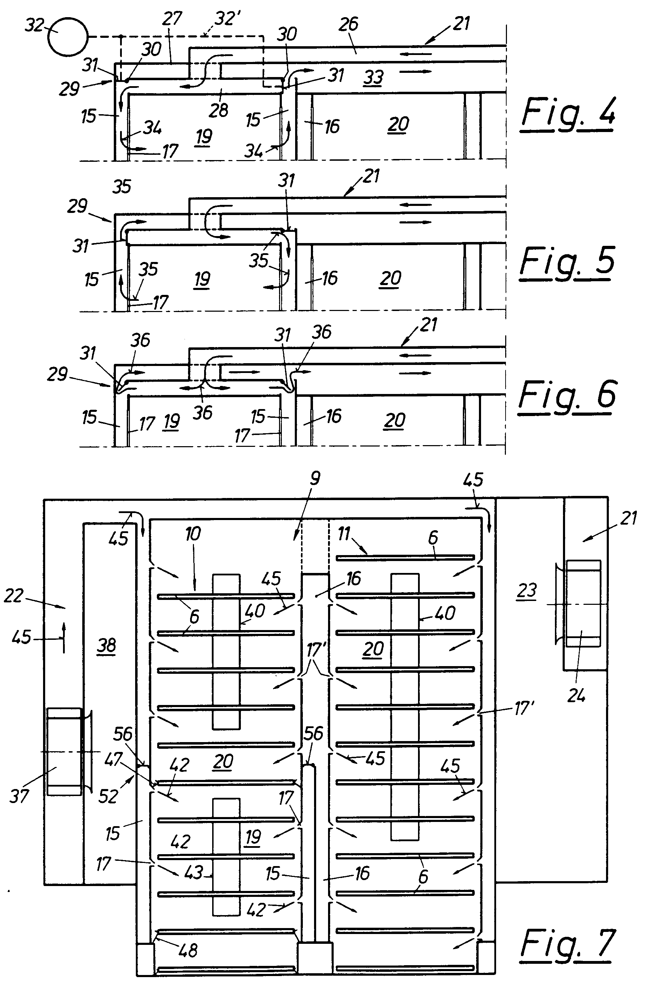

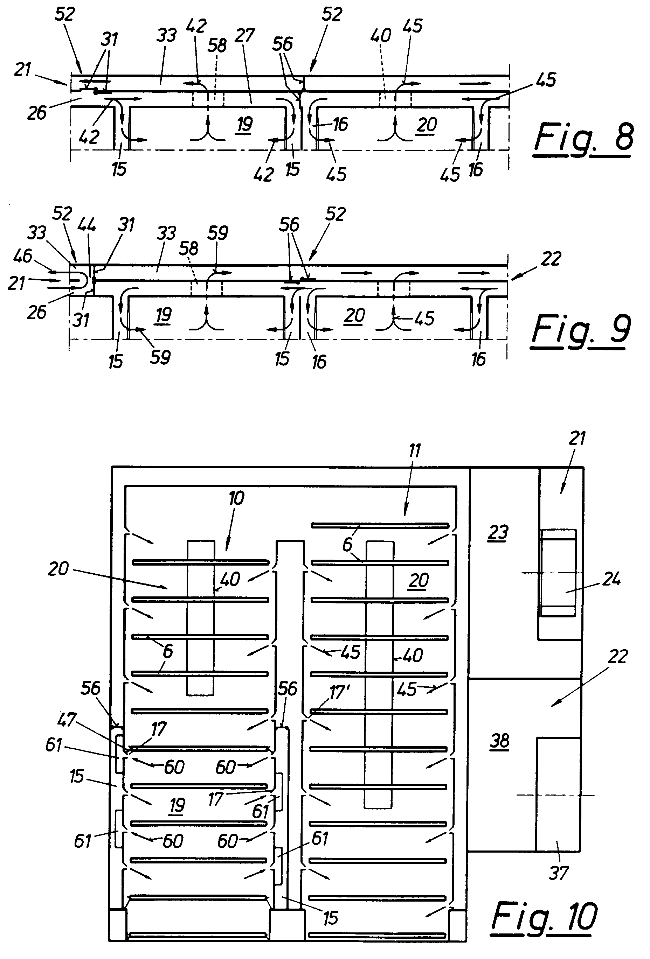

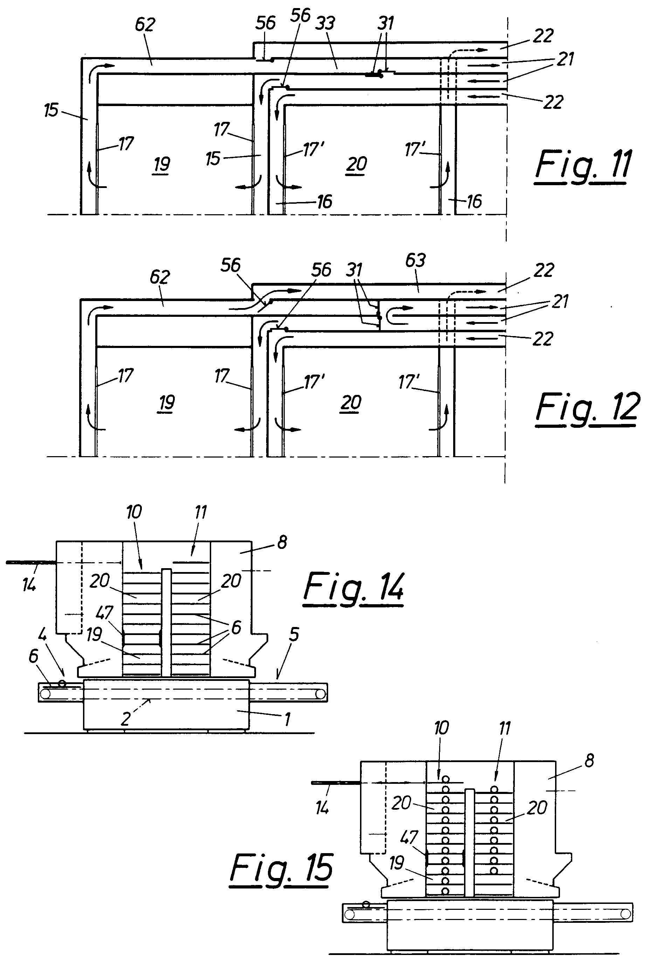

Weitere Kennzeichen und Vorteile der Erfindung ergeben sich aus der folgenden Beschreibung von Ausführungsbeispielen des Erfindungsgegenstandes, welche in der Zeichnung schematisch dargestellt sind. Fig.1 zeigt schematisch das Schema der Heißluftführung für die beiden Zonen des Backraumes bei einem ersten Ausführungsbeispiel. Fig.2 ist ein Vertikalschnitt durch den Backofen. Fig.3 ist ein vereinfachter Vertikalschnitt durch den Backraum des Backofens nach Fig.2 in vergrößertem Maßstab. Die Figuren 4, 5 und 6 zeigen die Heißluftzufuhr zur Vorbackzone in drei verschiedenen Betriebsstellungen, jeweils gesehen in einem Horizontalschnitt. Fig.7 zeigt eine Ausführungsvariante zu Fig.3, ebenfalls im Vertikalschnitt. Die Figuren 8 und 9 sind wieder Horizontalschnitte durch das Luftzuführungssystem für die Vorbackzone, ähnlich den Figuren 4 bis 6. Fig.10 zeigt eine weitere Ausführungsvariante im Vertikalschnitt ähnlich zu Fig.3. Die Figuren 11 und 12 sind wieder Horizontalschnitte durch das Heißluftversorgungssystem für die Vorbackzone bei der Ausführungsform nach Fig.10, in zwei unterschiedlichen Betriebstellungen Fig.13 zeigt das Schema eines weiteren Ausführungsbeispieles in einer Skizze ähnlich Fig.1. Die Fig.14 bis 19 zeigen aufeinanderfolgende Phasen der Betriebsweise eines erfindungsgemäßen Backofens

Fig.1 zeigt schematisch die Heißluftversorgung bei einem Backraum 9 eines Backofens, der eine einer in Fig.1 nicht dargestellen Beschickungsöffnung benachbarte Vorback- oder Anbackzone 19 und eine dieser folgende Ausbackzone 20 hat. Durch diese Zonen 19, 20 werden die zu backenden Teigstücke auf einem einen geschlossenen Kreislauf durchlaufenden Förderer geführt. Der Zone 19 ist eine Heizung 23 mit Gebläse zugeordnet, die an einen Heißluftkreislauf 21 angeschlossen ist, der über schematisch dargestellte Öffnungen 17 mit der Zone 19 des Backraumes 9 in Verbindung steht. Die Strömungsrichtung der von der Heizung 23 zu den beiderseitigen Öffnungen 17 geführten Heißluft ist in geeigneter Weise umkehrbar, sodaß die Öffnungen 17 entweder als Heißlufteinblaseöffnungen oder als Absaugöffnungen wirken.

Der Zone 20 des Backraumes 9 ist eine weitere Heizung 38 mit Gebläse zugeordnet, die in analoger Weise über einen Heißluftkreislauf 22 und Öffnungen 17' mit dem Backraum 9 in Verbindung steht. Die Strömung der Heißluft im Heißluftkreislauf 22 ist ebenfalls in geeigneter Weise so änderbar, daß die die Zone 20 durchwandernden Teigstücke in alternierender Richtung mit Heißluft beaufschlagt werden. Dementsprechend wirken die Öffnungen 17' abwechselnd als Einblase- und Absaugöffnungen.

Die beiden Heißluftkreisläufe 21, 22 sind durch ein Ventilsystem 52 miteinander derart verbunden. daß der Heißluftkreislauf 21 für die Zone 19 an den Heißluftkreislauf 22 für die Zone 20 angekoppelt werden kann. Hiefür sind Ventile 53, 53' vorhanden, welche in die Leitungen der Heißluftkreisläufe 21, 22 eingeschaltet sind. Ferner ist ein Kurzschlußkreislauf 54 für Heizung 23 vorgesehen. Auf diese Weise ist folgender Betrieb möglich: Soll die Zone 19 als Vorbackzone mit im Vergleich zur Zone 20 höherer Temperatur betrieben werden. so sind die Ventile 53 geschlossen und die Ventile 53' offen. Die Zone 19 wird mit Heißluft von der Heizung 23 versorgt, der Kurzschlußkreislauf 54 ist dann unwirksam, etwa durch Schließung in ihm angeordneter, nicht gesondert dargestellter Ventile. Die Heizung 38 ist dann nur für die Zone 20 wirksam. Durch entsprechende Wahl der Temperaturen der Heizungen 23, 38 läßt sich in den Zonen 19, 20 des Backraumes 9 jedwede gewünschte Backatmosphäre einstellen. Soll hingegen die Zone 19 als Teil der Ausbackzone wirken, so werden die Ventile 53 geöffnet und die Ventile 53' geschlossen. Die Heizung 23 arbeitet dann über den Kurzschlußkreislauf 54 im Kurzschlußbetrieb und ist für die Zone 19 nicht mehr wirksam. Die Öffnungen 17 der Zone 19 sind vielmehr über die geöffneten Ventile 53 an den Heißluftkreislauf 22 der Zone 20 angekoppelt. In den Zonen 19, 20 herrscht dann im wesentlichen dieselbe Backatmosphäre.

Dies Betriebsart ist von Wichtigkeit, wenn mehr als eine Charge des Backgutes gebacken werden soll. Zunächst wird die erste Charge in den Backraum 9 eingebracht und duchläuft die Zone 19 der erhöhten Vorbacktemperatur, worauf die auf den Backgutträgern durch den Backraum 19 geführten Teigstücke nach Verlassen der Vorbackzone 19 in die Ausbackzone 20 niedrigerer Temperatur eintreten. Sobald die letzten Teigstücke der Charge die Vorbackzone 19 verlassen haben, wird diese Zone durch Öffnung der Ventile 53 und Schließung der Ventile 53' und Umschaltung der Heizung 23 auf Kurzschlußbetrieb an die Zone 20 angekoppelt. Die vom umlaufenden Förderer für die Backgutträger transportierten Teigstücke können sodann beliebig oft erneut durch die beiden Zonen 19, 20 geführt werden, die auf gleicher Temperatur sind, bis die nötige Ausbackzeit erreicht ist. Die auf Kurzschlußbetrieb arbeitende Heizung 23 speichert indessen ihre Wärme, sodaß kein Energieverlust entsteht. Sind die Teigstücke ausgebacken, so wird dieses Backgut dem Backraum 9 entnommen. Sobald die letzten Teigstücke dieses Backgutes die Zone 19 verlassen haben, wird diese Zone 19 durch Schließung der Ventile 53 und Öffnung der Ventile 53' wieder an die Heizung 23 angekoppelt und von dieser mit der gespeicherten Wärme rasch wieder auf die für das Vorbacken erforderliche höhere Temperatur gebracht. Es können daher die ersten Teigstücke der nächsten Charge von unmittelbar nach diesem Umschalten der Zone 19 in diese Zone eingebracht werden, d.h. schon zu einem Zeitpunkt, zu welchem sich noch ein wesentlicher Teil der vorausgehenden Backgutcharge in der Zone 20 befindet. Diese Vorgänge können sich beliebig oft wiederholen.

Ein hiefür geeigneter Backofen ist in den Figuren 2 und 3 näher dargestellt. Der Backofen hat einen Sockel 1, in welchem ein horizontaler Förderer 2 angeordnet ist, der in beiden Richtungen im Sinne des Doppelpfeiles 3 in bekannter Art über eine elektronische Steuerung bewegbar ist. Verlängerungen des Förderers 2 über den Sockel 1 hinaus bilden eine Beschickungsstation 4 und Abnahmestation 5 an der Beschickungsstation 4 werden die auf Backgutträgern 6, z.B. in Form von Platten, ruhenden Teigportionen auf den Förderer aufgelegt und mit diesem durch eine Beschickungsöffnung 50 in den Backofen eingefahren. Eine Ausbringeöffnung 51 führt zur Abnahmestation 5, an der die fertiggebackenen Brote, gegebenenfalls zusammen mit den Backgutträgem 6 vom Förderer 2 abgenommen werden. Der Förderer 2 ist in bekannter Weise ein um Umlenkrollen 7 geführtes endloses Band.

Auf den Sockel 1 aufgesetzt ist ein Gehäuse 8, welches den Backraum 9 umschließt, in welchem die Backgutträger in einer Backatmosphäre entlang einer im Gehäuse 8 angeordneten Bahn geführt werden. Hiezu sind die in den Backraum 9 eingebrachten Backgutträger 6 in zwei Stapeln 10, 11 angeordnet, deren jeder einen Turm bildet, in welchem die einzelnen Backgutträger 6 übereinander angeordnet sind. Im Stapel 10 werden die Backgutträger 6 entlang von Führungen nach oben bewegt (Pfeil 12), im Stapel 12 nch unten (Pfeil 13). Hiezu werden die im Stapel 10 befindlichen Backgutträger 6 durch einen nicht dargstellten Fördermechanismus angehoben und im angehobenen Zustand des Stapels wird vom Förderer 2 der nächstfolgende Backgutträger 6 unter den Stapel 10 geschoben. Zugleich wird am oberen Ende dieses Stapels 10 der oberste Backgutträger 6 von einer horizontalen Fördereinrichtung 14 vom aufwärtsgehenden Stapel 10 an den abwärtsgehenden Stapel 11 übergeben. Von letzterem wird der jeweils unterste Backgutträger 6 wieder auf den Förderer 2 abgelegt. Dieser kann, falls gewünscht, den jeweiligen Backgutträger 6 wieder unter den aufwärtsgehenden Stapel 10 bringen, sodaß die Backgutträger 6 den Backraum 9 im geschlossenen Kreislauf mehrmals durchlaufen können. Während des Anhebens der beiden Stapel 10, 11 zwecks Einschieben eines Backgutträgers unter den nach oben bewegten Stapel 10 bzw. zur Entnahme des jeweils untersten Backgutträgers 6 im nach unten bewegten Stapel 11 halten Fixiereinrichtungen die jeweils darüberliegenden Backgutträger 6 der beiden Stape 10, 11 fest. Ein so ausgebildeter Backofen ist bis auf den mehrmaligen Durchlauf des Backraumes in der AT-B 390.549 im Detail beschrieben und braucht daher hier nicht näher erläutert zu werden.

Ist die gewünschte Ausbackzeit für das Backgut erreicht, so werden die vom abwärtsgehenden Stapel 11 auf den Förderer 2 zurückgelegten Backgutträger 6 durch entsprechende Betätigung des horizontalen Förderers 2 nach rechts aus dem Gehäuse 8 durch eine Ausbringeöffnung 51 zur Abnahmestation 5 ausgefahren.

Die Taktzeit der Bewegungsschritte der beiden Stapel 10, 11 und die Anzahl der Umläufe der Backgutträger 6 im Backraum 9 ist wählbar, sodaß jede gewünschte Gesamtbackzeit entsprechend der jeweils zu backenden Brotsorte nach Wunsch einstellbar ist.

Jeder Stapel 10, 11 ist beidseitig zumindest abschnittsweise, vorzugsweise jedoch im wesentlichen über seine gesamte Höhe, von Heißluftkanälen 15, 16 begleitet, von welchen die Heißluft über die düsenartigen Öffnungen 17. 17' (Fig.3) zu den auf den Backgutträgern 6 befindlichen Teigstücken. auf diese gerichtet, strömt. Die Heißluftkanäle 15 sind der Vorbackzone 19 zugeordnet und erstrecken sich wie diese nur über einen Bruchteil, etwa ein Drittel der Höhe des Stapels 10. Über die restliche Höhe dieses Stapels 10 ist dieser von den Heißluftkanälen 16 der Ausbackzone 20 begleitet, ebenso wie die gesamte Höhe des abwärtsgehenden Stapels 11. Die Heißluftkanäle 15 schließen an die Heißluftkanäle 16 an und sind mit diesen durch Öffnungen 55 (Fig.3) verbunden, die durch die als schwenkbare Klappen 56 ausgebildeten Ventile 53 dicht verschließbar sind. Dadurch können im Backraum 9 zwei klimamäßig unterschiedliche Zonen 19, 20 der Backatmosphäre geschaffen werden, von denen sich die Zone 19 nur über den unteren Teil des aufwärtsgehenden Stapels 10 erstreckt und eine Vorbackzone bildet, wogegen die andere, eine Ausbackzone bildende Zone 20 sich über den restlichen, größeren Teil der Höhe des aufwärtsgehenden Stapels 10 und über den gesamten abwärtsgehenden Stapel 11 erstreckt. Die Zone 19 ist als Vorbackzone wirksam, wenn die Klappen 56 der Ventile 53 geschlossen sind. Sind die Klappen 56 offen, so ist die Zone 19 an die Zone 20 angekoppelt und bildet einen Teil der Ausbackzone. Hiefür sind beide Zonen 19, 20 an die gesonderten Heißluftkreisläufe 21, 22 (Fig. 1, 3) angeschlossen. Der Heißluftkreislauf 21 hat eine seitlich an das Gehäuse 8 des Backraumes 9 angebaute Heizung 23 welche die Luft für die Erzeugung der Backatmosphäre erwärmt. Die erwärmte Luft wird durch einen Einlaßstutzen 25 eines Gebläses 24 angesaugt und in einen Heißluftzufuhrkanal 26 gedrückt, welcher entlang der Rückwand 27 (Fig.4) des Backraumes zu einem Verteilerkanal 28 führt, an den die beiden seitlich der Backgutträger 6 liegenden Heißluftkanäle 15 über ein Umsteuersystem 29 zur Umsteuerung der Strömungsrichtung der Heißluft in der Vorbackzone 19 angeschlossen sind. Dieses Umsteuersystem 29 weist zwei um vertikale Achsen 30 schwenkbare Klappen 31 auf, die gemeinsam von einem Stellmotor 32 über ein nur schematisch dargestelltes Gestänge 32' zur Steuerung der Luftzufuhr zu den Heißluftkanälen 15 verschwenkt werden können. In der in Fig.4 dargestellten Lage gibt die linke Klappe 31 den Weg für den über den Zufuhrkanal 26 zugeführten Heißluftstrom in den linken Heißluftkanal 15 frei, von wo die Luft in Richtung der Pfeile 34 durch die schlitzartigen Öffnungen 17 von links nach rechts durch die Zone 19 streicht und durch die in der rechten Begrenzungswand der Zone 19 vorgesehenen Öffnungen 17 in den rechten Heißluftkanal 15 gelangt. Von dort wird die Luft, an der rechten Klappe 31 vorbei in einen Abfuhrkanal 33 gesaugt, der parallel zum Heißluftzufuhrkanal 26 an der Rückwand des Backofens vorgesehen ist und zurück zur Heizung 23 und zur Saugseite des Gebläses 24 führt.

Fig.5 zeigt die durch Pfeile 35 angedeutete Strömungsrichtung der Heißluft nach Umsteuerung der Klappen 31 mittels des Stellmotors 32 des Umsteuersystems 29 in die andere Endstellung. Hiebei ist der Zustrom der Heißluft vom Verteilerkanal 28 in den linken Heißluftkanal 15 in die linke Klappe 31 abgeschlossen. Die Luft kann hingegen aus dem Verteilerkanal 28 an der rechten, geöffneten Klappe 31 vorbei in den rechten Heißluftkanal 15 strömen. Dies bedeutet, daß die von der Heizung 23 zugeführte Heißluft die Zone 19 von rechts nach links durchströmt (Pfeile 35).

Auf diese Weise läßt sich durch Umsteuerung der Klappen 31 erreichen, daß die Richtung der Heißluftströmung durch die Vorbackzone 19 des Backraumes 9 taktweise umgeschaltet wird, sodaß eine gleichmäßige Belüftung aller auf den Backgutträgem 6 durch diese Zone 19 transportierten Teigstücke erfolgt. Für eine solche Anordnung können die Öffnungen 17, durch welche die Heißluft aus den Heißluftkanälen 15 in den Backraum 9 bzw. aus diesem wieder herausströmt, paarweise auf gleicher Höhe angeordnet sein.

Die beschriebene Konstruktion läßt sich jedoch auch auf einen Kurzschlußbetrieb für die Heizung 23 verstellen, sodaß also die Zone 19 durch die Heizung 23 nicht beheizt wird. Hiezu brauchen nur die beiden Klappen 31 mittels des Stellmotors 32 in eine Mittelstellung gebracht zu werden (Fig.6.). Die über den Heißluftzufuhrkanal 26 vom Gebläse 24 zugeführte Heißluft strömt dann in Richtung der Pfeile 36 aus dem Verteilerkanal 28 an den halb geöffneten Klappen 31 vorbei direkt in den Abfuhrkanal 33, denn dieser Weg bildet einen wesentlich geringeren Strömungswiderstand als der Weg durch die Öffnungen 17 und die Zone 19 hindurch. Es läßt sich daher eine Belüftung des Backgutes durch strömende Luft, welche von dem Heißluftkreislauf 21 kommt, auf diese Weise praktisch ausschalten. Dies ist von Wichtigkeit, wenn das Backgut im geschlossenen Kreislauf den gesamten Backraum 9 zweimal oder mehrmals durchlaufen soll, um die nötige Gesamtbackzeit zu erreichen. Da die Zone 19 als Vorbackzone mit im Vergleich zum restlichen Backraum 9 erhöhter Temperatur arbeitet, würde diese höhere Temperatur beim zweiten und jedem folgenden Durchlauf störend wirken. Bei einem solchen mehrfachen Durchlaufen der Zone 19 durch dasselbe Backgut bleibt die Zone 19 jedoch nicht mit Heißluft gänzlich unversorgt, sondern sie wird bezüglich der Heißluftversorgung an die Zone 20 angekoppelt. Für die Zone 20 erfolgt die Heißluftversorgung über den Heißluftkreislauf 22, der eine weitere Heizung 38 und ein Gebläse 37 (Fig.3) aufweist. Die beiden Gebläse 24, 37 samt den zugehörigen Heizungen 23, 38 sind an einander gegenüberliegenden Seiten des Gehäuses 8 des Backraumes 9 angeordnet. Das Gebläse 37 drückt die erwärmte Luft in einen weiteren Heißluftzufuhrkanal 39, der an der Deckwand 57 des Backraumes 9 zu den an den beiden Seiten der Stapel 10, 11 der Backgutträger 6 angeordneten Heißluftkanälen 16 führt, die in gleicher Weise mit paarweise einander auf gleicher Höhe gegenüberliegenden schlitzförmigen Öffnungen 17' für den Heißluftaustritt bzw. -eintritt versehen sein können, wie dies für die Zone 19 beschrieben wurde. Fig.3 zeigt jedoch eine davon abweichende Anordnung der Öffnungen 17', und zwar sind diese Öffnungen jeweils um einen Schritt der taktweisen Förderung der Backgutträger 6 in den Stapeln 10, 11 versetzt angeordnet. Dadurch ergibt sich eine Einblasung der über die Heißluftkanäle 16 zugeführten Heißluft in jeder Etage der Zone 20 in abwechselnder Richtung, wodurch eine Selbststeuerung für die Heißluftführung gegeben ist. Die Absaugung der in diese Zone 20 des Backraumes 9 eingeblasenen Luft erfolgt durch Absaugöffnungen 40, die an der Rückwand 27 des Backraumes 9 angeordnet sind und zu dem Ansaugraum führen, in welchem die Heizung 38 angeordnet ist und aus welchem das Gebläse 37 die Luft über einen Saugstutzen 41 ansaugt.

Da für die Zone 20, welche im Betrieb des Backofens die Ausbackzone bildet, stets eine Belüftung mit Heißluft aufrechterhalten werden muß, braucht für die Luftzuführung zu dieser Zone keine Einrichtung vorgesehen zu werden, mit welcher der Heißluftzustrom zu dieser Zone 20 unterbunden wird. Es kann jedoch, falls gewünscht, auch für diese Zone 20 ein Umsteuersystem vorgesehen sein, wie es mit 29 in den Fig.4. und 5 dargestellt ist und mit welchem die Heißluftzufuhr abwechselnd in den linken Heißluftkanal 16 und in den rechten Heißluftkanal 16 erfolgt. In diesem Fall können die Öffnungen 17' auch in der Zone 20 paarweise auf gleicher Höhe angeordnet sein. Die Mittelstellung der Klappen (Fig.6.) kann jedoch für die Zone 20 entfallen, da ja für diese Zone keine Neutralisation erforderlich ist.

Zweckmäßig ist die Umschaltung der Klappen 31 von der einen in die andere Endstellung gekoppelt mit der Taktzeit mit welcher die Backgutträger 6 im Stapel 10 (und gegebenenfalls auch im Stapel 11) nach oben (bzw. unten) befördert werden. Die Strömungsrichtung in der betreffenden Zone 19 (bzw. 20) kehrt in einem solchen Fall mit jedem Fördertakt der Backgutträger 6 um.

Wie bereits erwähnt, ist es in einzelnen Betriebsphasen erforderlich, die Zone 19 temperaturmäßig an die Zone 20 anzukoppeln Hiezu dienen die durch die Klappen 56 verschließbaren Öffnungen 55 in der Trennwand zwischen den Heißluftkanälen 15, 16. Soll die Zone 19 als Vorbackzone mit erhöhter Temperatur (also mit Heißluftversorgung über die Heißluftkanäle 15) betrieben werden, so verbleiben die Klappen 56 geschlossen. Soll hingegen in der Zone 19 dasselbe Klima herrschen wie in der Zone 20, so werden die Klappen 56 des Ventilsystems 53 geöffnet und es wird das Umsteuersystem 29 für die Klappen 31 so betätigt, daß der Heißluftkreislauf 21. welcher ansonsten die Heißluftkanäle 15 versorgt, auf Kurzschlußbetrieb gestellt wird (Fig.6.)

Wenn die Zone 19 als Vorbackzone mit im Vergleich zur Temperatur der Ausbackzone 20 erhöhter Temperatur betrieben wird, so strömt kein wesentlicher Teil der Wärmedifferenz aus der Zone 19 in den darüberliegenden Teil der Zone 20 im Stapel 19 ab, da die Heißluft, welche über die Öffnungen 17 in die Zone 19 eingeblasen wird, die einzelnen Etagen dieser Zone im wesentlichen horizontal durchströmt und die Absaugung so wirksam ist, daß ein Heißluftabstrom nach oben kaum stattfindet. Erforderlichenfalls können jedoch die Zonen 19, 20 gegeneinander durch Dichtungen 47 abgedichtet sein, z.B. durch federnd an den Backgutträgem 6 anliegende Dichtstreifen. Weitere Dichtungen 48 können am unteren Ende der Vorbackzone 19 angeordnet sein, um zu verhindem, daß ein Wärmeverlust durch Austritt von Backatmosphäre nach unten zum Förderer 2 auftritt. Gegebenenfalls kann unterhalb der Vorbackzone 2 noch ein neutrales Abteil 49 (Fig.3) angeordnet sein, welches gleichsam eine Schleuse zwischen Förderer 2 und Vorbackzone 19 bildet.

Ein wesentlicher Vorteil eines solchen Backofens ist, daß er es ermöglicht, die Wartezeiten beim Übergang auf eine Backware mit unterschiedlicher Backzeit praktisch auf Null zu reduzieren. Dies ist in den Figuren 14 bis 19 schematisch für zwei Backgute unterschiedlicher Backzeit veranschaulicht, wobei die Teigportionen des zuerst eingebrachten Backgutes mit Kreisen und die Teigportionen des darauf folgenden Backgutes mit Dreiecken veranschaulicht sind. Der Verfahrensablauf ist wie folgt:

Der Backofen wird an der Beschickungsstation 4 (Fig. 14) mit auf die Backgutträger 6 aufgelegten, zu backenden Teigstücken beschickt. Die Backgutträger werden nacheinander vom Förderer 2 unter den linken Stapel 10 transportiert und von unten an diesen Stapel 10 durch die nicht dargestellte Hubvorrichtung übergeben. Die Backgutträger gelangen sodann zunächst in die auf höhere Temperatur gehaltene Vorbackzone 19. Sobald die ersten Teigstück diese Zone 19 durchlaufen haben, gelangen sie in die darauffolgende, auf niedrigerer Temperatur gehaltene Zone 20 (Ausbackzone) des linken Stapels 10 und werden am oberen Ende desselben von der Fördereinrichtung 14 auf den abwärtsgehenden rechten Stapel 11 übergeben (Fig.15). Die Beschickung wird fortgesetzt bis die volle Kapazität des Backofens erreicht ist. Hiebei verbleiben die Klappen 31 (Fig.4, 5) durch entsprechende Steuerung des Stellmotors 32 abwechselnd in der in den Figuren 4 bzw. 5 befindlichen Stellung, in welcher der Heißluftzustrom aus dem Heißluftzufuhrkanal 26 zum linken bzw. rechten Heißluftkanal 15 freigegeben ist, sodaß die Zone 19 mit Heißluft in altemierender Richtung durchströmt wird. Die von den Klappen 56 gebildeten Ventile 53 sind hiebei geschlossen.

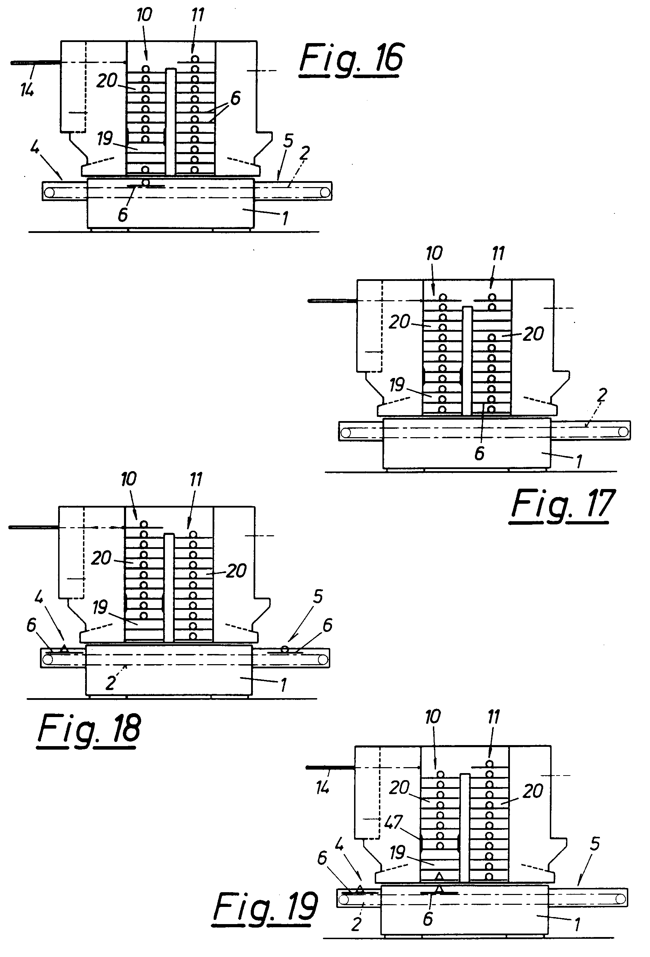

Sobald die ganze Charge des Backgutes in den Backofen eingebracht ist, ist etwa die Betriebsphase nach Fig. 16 erreicht. Wie dort dargestellt, ist der letzte Backgutträger 6 gerade im Begriff, die Vorbackzone 19 des Stapels 10 zu verlassen und in die darauffolgende Ausbackzone 20 einzutreten Der Förderer 2 hat die ersten beiden Backgutträger 6 vom Stapel 11 wieder zurück zum Stapel 10 geführt und die Hubvorrichtung hat den ersten Backgutträger 6 wieder von unten in den Stapel 10 eingeführt (Pfeil 58, Fig.16). Es erfolgt somit ein neuerlicher Eintritt der Teigstücke dieser Charge in die Zone 19. Um zu vermeiden, daß diese Zone 19 erneut als Vorbackzone mit erhöhter Temperatur wirkt. werden. sobald der letzte Backgutträger 6 der betreffenden Charge im Begriff ist, die Zone 19 zu verlassen (Stellung nach Fig.16). die Klappen 31 durch den Stellmotor 32 in die in Fig.6 dargestellte Mittelstellung gebracht, in welcher der Heißluftkreislauf 21 auf Kurzschlußbetrieb geschaltet ist. Dies entspricht einer Schließung der Ventile 53' (Fig.1.). Zugleich werden die Klappen 56 (Fig.3) des Ventilsystems 52 (Fig.1) geöffnet, so daß die Heißluftkanäle, welche die Zone 19 begleiten, an die Heißluftkanäle 16 der Zone 20 angekoppelt werden und somit vom Heißluftkreislauf 22 (Fig.3) mit Heißluft versorgt werden, deren Temperatur jedoch niedriger ist als jene des Heißluftkreislaufes 21. Die von unten in die Zone 19 neu eintretenden Backgutträger 6 bzw. die auf ihnen befindlichen Teigportionen treffen daher in der Zone 19 nun auf eine Atmosphäre, welche im wesentlichen gleich ist jener in der Zone 20. Geringfügige Temperaturunterschiede beim Übergang, welche durch etwaige Wärmekapazitäten hervorgerufen werden können, spielen keine Rolle.

Es beginnt nun ein erneuter Durchlauf der eingebrachten belegten Backgutträger 6 durch den Backofen (Fig.17), wobei die Klappen 31 (Fig.6) in der Mittelstellung verbleiben. Hiebei wird der Ausbackprozess fortgesetzt, wobei gegebenenfalls mehrere Umläufe im Backraum 9 erfolgen können, bis die gewünschte Backzeit erreicht ist. Während dieser Umläufe verbleibt das Backgut in einer Atmosphäre mit im wesentlichen gleichmäßiger Temperatur, hervorgerufen durch den Heißluftkreislauf 22.

Nach Beendigung des Umläufes oder der gewünschten Anzahl an Umläufen ist das zuerst eingebrachte Backprodukt am unteren Ende des Stapels 11 ausgabebereit (Fig.18). Sobald die Ausgabe des fertiggebackenen Backgutes an der Abnahmestation 5 beginnt (Fig.18) verlassen die letzten Backgutträger 6 dieser Charge die Zone 19, die nun für das nächste Backgut, das gegebenenfalls unterschiedliche Backzeit und auch unterschiedliche Backtemperatur im Vergleich zum vorhergehenden Backgut erfordern kann, aktiv gemacht wird. Dies geschieht durch Umsteuerung der Klappen 31 in eine Stellung, in welcher die Heißluft aus dem Heißluftkreislauf 21 zu den Heißluftkanälen 15 wieder freigegeben wird (Fig.4, 5). Zugleich mit dieser Umsteuerung der Klappen 31 werden die Klappen 56 (Fig.3) wieder geschlossen. Die Beschickung des Backofens mit der nächsten, auf den Backgutträgem 6 befindlichen Backgutcharge an der Beschickungsstation 4 kann nun zugleich mit der Ausbringung der zuvor eingebrachten Backgutcharge an der Abnahmestation 5 erfolgen, ohne daß zuvor der Backofen leer gefahren werden muß. Beschickung und Ausgabe erfolgen Taktweise mit derselben Geschwindigkeit, auch wenn das nachfolgende Backgut eine andere Gesamtbackzeit hat. Diese wird bei der Berechnung der nachfolgenden Anzahl der Kreisläufe entsprechend berücksichtigt.

Fig. 19 zeigt, daß die nächstfolgende Charge des Backgutes (angedeutet durch Dreiecke) bereits in die Zone 19 eintritt, sobald der letzte Backgutträger, welcher Backgut der zuvor eingebrachten Charge trägt (angedeutet durch Kreise) im Begriffe ist, die Zone 19 zu verlassen.

Die voneinander unabhänigen Heißluftkreisläufe 21, 22 ermöglichen es, die Temperaturen in den Zonen 19 und 20 nach Belieben zu wählen. Dies ist von Bedeutung, wenn im gleichen Backofen mehrere Brot- bzw. Backgutsorten nacheinander gebacken werden sollen, bei denen unterschiedliche Vorbacktemperaturen und/oder Ausbacktemperaturen gewünscht sind. Zusätzlich ist von Vorteil, daß der Heißluftkreislauf 21 im Kurzschlußbetrieb die von seiner Heizung 23 erzeugte Wärme speichert, sodaß die erforderliche Wärmemenge sofort zur Verfügung steht, wenn sie benötigt wird.

Die Ausführungsform nach den Figuren 7 bis 9 ähnelt im wesentlichen jener nach den Figuren 1 bis 6, jedoch ist die Heißluftzufuhr zur Zone 19 anders. Unverändert bleibt im Vergleich zu zuvor beschriebenen Konstruktion, daß die Zone 19, je nach dem, ob sie als Vorback- oder Ausbackzone wirken soll, entweder vom Heißluftkreislauf 21 oder vom Heißluftkreislauf 22 mit Heißluft versorgt wird. Unterschiedlich ist jedoch, daß auch in der Zone 19 die Richtung der Heißluftströmung selbststeuernd über die Bewegung der gestapelten Backgutträger 6 umgesteuert wird. Beim Beschickungsvorgang, wenn die Zone 19 als Vorbackzone wirken soll und demgemäß vom Heißluftkreislauf 21 mit Heißluft versorgt wird, befinden sich die Klappen 31, 56 des Ventilsystems 52 in der in Fig.8 dargestellten Stellung. Die über den Heißluftzufuhrkanal 26 zugeführte Heißluft strömt in Richtung der Pfeile 42 aus dem Kanal 26 in die Heißluftkanäle 15, welche die Zone 19 auf beiden Seiten begleiten. Die Öffnungen 17, durch welche die Heißluft aus diesen Kanälen 15 in die Zone 19 von beiden Seiten eintritt, sind jeweils um eine Stufe der taktweisen Höhenversetzung der Backgutträger 6 gegeneinander versetzt. Beide Seiten der Heißluftkanäle 15 werden jedoch stets zugleich mit Heißluft aus dem Kanal 26 versorgt, die Heißluft strömt daher stets von beiden Seiten in die Zone 19 ein, nur - gesehen in Transportrichtung der Backgutträger 6 im Stapel 10 - in jeweils unterschiedlicher Richtung (Pfeile 42) die Absaugung erfolgt durch eine an der Rückwand 27 des Backraumes 9 angeordnete Absaugöffnung 43, durch welche die abgesaugte Luft durch eine Stutzen 58 in den Abfuhrkanal 33 strömt, welcher die abgesaugte Luft zurück zur Saugseite des Gebläses 24 des Heißluftkreislaufes 21 führt. Die Klappen 56 des Ventilsystems 52 (Fig.7, 8) sind hiebei geschlossen.

Die Zone 20 wird wie bisher vom Heißluftkreislauf 22 versorgt und über in Höhenrichtung gegeneinander versetzte Öffnungen 17' wird die Heißluft in diese Zone 20 von beiden Seiten eingeblasen. Die Absaugung erfolgt wie bei der Ausfuhrungsform nach den Figuren 3 bis 6 durch die an der Rückwand 27 des Backraumes 9 angeordneten Absaugöffnungen 40. In der Zone 20 strömt die Heißluft somit in Richtung der Pfeile 45. In beiden Zonen 19, 20 erfolgt die Heißluftzufuhr zum Backgut somit alternierend von links bzw. rechts, wobei die Umsteuerung durch die Hub- bzw. Absenkbewegung der Backgutträger 6 in den Stapeln 10 11 selbsttätig erfolgt.

Soll jedoch die Zone 19 als Ausbackzone wirken und an die restliche Ausbackzone 20 angekoppelt werden, so werden die Klappen 56 des Ventilsystems 52 geöffnet und die Klappen 31 aus der in Fig.8 dargestellten Stellung in die in Fig.9 gezeichnete Stellung umgeschaltet. In dieser Stellung ist der Heißluftkreislauf 21 auf Kurzschluß geschaltet, da die Klappen 31 den Heißluftzustrom zum gesamten nachgeschalteten Kanalsystem absperren, hingegen über eine Öffnung 44, welche in der Stellung nach Fig.8 geschlossen war, nunmehr die Verbindung zwischen Heißluftzufuhrkanal 26 und Abfuhrkanal 33 direkt herstellen. Die über den Kanal 26 zugeführte Heißluft dreht daher in Richtung des Pfeiles 46 um. Die in der Offenstellung befindlichen Klappen 56 bewirken nun, daß die Heißluftkanäle 15 an den Heißluftkreislauf 22 angekoppelt sind, wobei die Luft in Richtung der Pfeile 59 von beiden Seiten in die Zone 19 einströmt und diese Zone 19 wieder durch den Stutzen 58 verläßt. Der hinter diesem Stutzen 58 liegende Abschnitt des Abfuhrkanales 33 ist in Bezug auf den Heißluftkreislauf 21 durch die geschlossene Klappe 31 abgeschlossen, hingegen durch die geöffnete Klappe 56 an den Heißluftkreislauf 22 angekoppelt, sodaß die aus beiden Zonen 19, 20 abgesaugte Luft zurück zum Gebläse 37 gesaugt wird. Die Versorgung der Zone 20 mit Heißluft und die Absaugung aus dieser Zone erfolgt wie früher beschrieben.

Das Ausführungsbeispiel nach den Figuren 10 bis 12 ähnelt jenem nach den Figuren 7 bis 9, die Heißluftversorgung für die Zone 20 erfolgt in analoger Weise wie dort beschrieben. Unterschiedlich ist, daß sich beide Heizungen 23, 38 samt den zugehörigen Gebläsen 24, 37 auf derselben Seite des Backraumes 9 befinden. Ferner ist unterschiedlich, daß für die Zone 19 die Absaugung nicht an der Rückwand des Backraumes erfolgt, sondern über die Öffnungen 17 jeweils an der der Einblaseöffnung 17 gegenüberliegenden Stelle (Fig.10). Die Heißluftströmung erfolgt für die einzelnen Etagen in alternierender Richtung (Pfeile 60), wobei sich die Umsteuerung der Beblasungsrichtung für das Backgut durch dessen Aufwärtsbewegung im Stapel 10 selbsttätig ergibt. Da dies zur Folge hat, daß Einblasung und Absaugung jeweils auf beiden Seiten des Stapels 10 stattfinden, sind innerhalb der Heißluftkanäle 15, die im Vorbackzonenbetrieb zugleich vom Heißluftkreislauf 21 mit Heißluft beschickt werden (Fig.11), Abfuhrkanäle 61 (Fig.10) hinter jenen Öffnungen 17 angeordnet, welche als Absaugöffnungen dienen. Diese Abfuhrkanäle 61 führen zu einem Sammelkanal 62, welcher in der in Fig.11 dargestellten Stellung der Klappen 31, 56 an den Abfuhrkanal 33 des Heißluftkreislaufes 21 angeschlossen ist. In der in Fig.12 dargestellten Stellung, in welcher die Zone 19 vom Heißluftkreislauf 22 mit Heißluft versorgt wird, ist der Kanal 62 hingegen mit dem Abfuhrkanal 63 des Heißluftkreislaufes 22 verbunden. Diese Konstruktionsvariante erfordert in der Zone 19 keine Absaugöffnung an der Rückwand 27 des Backraumes 9, die Querdurchströmung der einzelnen durch die Backgutträger 6 begrenzten Abteile der Zone 19 mit Heißluft erfolgt daher im wesentlichen ungestört von der einen Seite des Stapels 10 zur anderen Seite.

Die Betriebsweise beim Backen von zwei oder mehr Backgutsorten, gegebenenfalls mit unterschiedlichen Backtemperaturen und Backzeiten, ist wie im Zusammenhang mit den Figuren 14 bis 19 beschrieben.

Selbstverständlich müssen die zur Heißluftsteuerung dienenden Ventile nicht als schwenkbare Klappen ausgebildet werden. Eine Ausbildung z.B. als Schieber ist ebensogut möglich.

Um sich an das Erfordernis unterschiedlicher Backtemperaturen des Backgutes bestmöglichst anpassen zu können, hat zumindest eine der beiden Heizungen 23, 38 eine einstellbare Heizleistung. Es ist auch möglich, die beiden Heizkreisläufe 21, 22 der beiden Zonen 19, 20 des Backraumes 9 an ein gemeinsames Gebläse anzuschließen und in die beiden Heizkreisläufe 21, 22 unterschiedliche bzw. voneinander unabhängige Heizregister einzubauen, welche auf die in den beiden Zonen 19, 20 zu erreichenden Temperaturen abgestimmt sind. Es wäre auch denkbar, für die beiden Heizkreisläufe 21, 22 sowohl ein gemeinsames Gebläse als auch ein gemeinsames Heizregister vorzusehen und für jenen Heizkreislauf 21, welcher der Vorbackzone 19 zugeordnet ist, eine Zusatzheizung in den Heizkreislauf einzubauen. In der Regel ist jedoch eine völlige Unabhängigkeit der beiden Heizkreisläufe 21, 22 günstiger.

Die Backgutträger 6 müssen nicht von Platten gebildet sein, wenngleich diese Ausführungsform günstig ist, da solche Backplatten aus dem Backofen heiß herauskommen und daher im heißen Zustand wieder belegt werden können, sodaß die Platten durch Abgabe ihrer Speicherwärme die Beschickungsphase unterstützen und den Anbackprozess beschleunigen. Es können jedoch statt Backplatten auch etwa Backbleche oder in einer Kette geführte Mulden bzw. Gehänge Verwendung finden. Für letztere wäre allerdings die Abdichtung der Zonen 19, 20 gegeneinander schwieriger als bei flächigen Backgutträgern.

Die Beschickungsstation 4 und die Abnahmestation 5 müssen nicht auf einander gegenüberliegenden Seiten des Backofens angeordent sein, wenngleich dies besonders bedienungsfreundlich ist. Es wäre denkbar, diese beiden Stationen zu einer gemeinsamen Station zu vereinen, sodaß Beschickung und Entnahme an derselben Seite des Backofens stattfinden. Die Steuerung des Förderers 2 muß dem natürlich Rechnung tragen.

Fig.13 zeigt eine weitere Ausführungsform, bei welcher der der Ausbackzone 20 zugeordnete Heizkreislauf 22 nicht nur die Zone 20 dauernd mit Heißluft versorgt, sondern auch die Zone 19, sodaß also auch Öffnungen 17' für den Heißluftaustritt in der Zone 19 vorhanden sind. Zusätzlich hiezu sind. wie dies früher beschrieben wurde. die Öffnungen 17 des Heißluftkreislaufes 21 für die Heißluftversorgung der Zone 19 in dieser Zone vorgesehen. Durch Ventile 53' ist der Heißluftkreislauf 21 auf den Kurzschlußkreislauf 54 umschaltbar. Im Betrieb der Zone 19 als Vorbackzone sind hiebei beide Heißluftkreisläufe 21, 22 zur Versorgung der Zone 19 mit Heißluft wirksam, im Betrieb der Zone 19 als Teil der Ausbackzone wird der Heißluftkreislauf 21 auf Kurzschlußbetrieb umgestellt. Diese Ausführungsform hat jedoch den Nachteil eines erhöhten Aufwandes an Kanälen für die Versorgung der Zone 19 mit Heißluft und es besteht außerdem der Nachteil, daß sich die die Zone 19 durchquerenden Heißluftströme der beiden Heißluftkreisläufe 21, 22 nicht völlig bei der Absaugung trennen lassen.

## Patentansprüche

1. Backofen mit einem Gehäuse (8) mit einer Beschickungsöffnung (50) zur Beschickung des Backraumes (9) des Backofens mit Backgut und mit einer Ausgabeöffnung (51) zur Entnahme der fertiggebackenen Backgutes, welches im Backraum (9) auf Backgutträgern (6) in einer Backatmosphäre entlang einer im Gehäuse (8) angeordneten Bahn geführt ist, die einen geschlossenen Kreislauf bildet, und wobei das Backgut entlang der Bahn mit Heißluft aus Öffnungen (17, 17') von Heißluftkanälen (15, 16) in wechselnder Richtung beblasen wird, welche die Bahn zumindest abschnittsweise begleiten und wobei die Bahn zwei aufeinander folgende Zonen (19, 20) hat, in denen durch zwei Heizungen (23, 38) unterschiedliche Temperaturen einstellbar sind, dadurch gekennzeichnet, daß an die beiden Heizungen (23, 38) Heißluftkanäle für zwei Heißluftkreisläufe (21, 22) zur Beblasung des Backgutes in alternierender Richtung angeschlossen sind, von denen der eine Heißluftkreislauf (22) beiden Zonen (19, 20) zugeordnet ist, wogegen der andere Heißluftkreislauf (21) nur der der Beschickungsöffnung (50) folgenden Zone (19) zugeordnet und durch ein Ventilsystem (52) auf Kurzschlußbetrieb umschaltbar ist.

2. Backofen nach Anspruch 1, dadurch gekennzeichnet. daß der beiden Zonen (19,20) zugeordnete Heißluftkreislauf (22) an die Heißluftkanäle (15) der der Beschickungsöffnung (50) folgenden Zone (19) durch das Ventilsystem (52) ankoppelbar ist.

3. Backofen nach Anspruch 2, dadurch gekennzeichnet, daß das Ventilsystem (52) zumindest teilweise von einem Umsteuersystem (29) zum Wechsel der Beblasungsrichtung gebildet ist.

4. Backofen nach einem der Ansprüche 1 bis 3, dadurch gekennzeichnet, daß zumindest eine der beiden Heizungen (23, 38) eine einstellbare Heizleistung hat.

5. Backofen nach einem der Ansprüche 2 bis 4, dadurch gekennzeichnet, daß die Heißluftkanäle (15) des Heißluftkreislaufes (21) für die der Beschickungsöffnung (50) folgende Zone (19) anschließend an die Heißluftkanäle (16) des Heißluftkreislaufes (22) für die andere Zone (20) angeordnet sind und an letztere Kanäle (16) über Ventile (53) anschließbar sind.

6. Backofen nach Anspruch 5, dadurch gekennzeichnet, daß die Ventile (53) von schwenkbaren Klappen (31, 56) gebildet sind, die durch zumindest einen Stellmotor (32) verstellbar sind.

7. Backofen nach einem der Ansprüche 1 bis 6, dadurch gekennzeichnet, daß das Ventilsystem (52) der Heißluftkanäle (15) für die der Beschickungsöffnung (50) folgende Zone zugeordnete schwenkbare Klappen (31, 56) aufweist, die in ihrer einen Endstellung den Luftzustrom in diesen Heißluftkanal (15) freigeben, in der anderen Endstellung absperren und einen Kurzschluß für die Heißluftzufuhr bilden, sodaß die Heißluft unter Umgehung der Backgutträger (6) zurück zur Heizung (23) strömt.

8. Backofen nach einem der Ansprüche 1 bis 7, dadurch gekennzeichnet, daß die Bahn die Backgutträger (6) in zwei nebeneinander angeordneten Stapeln (10, 11) führt, in deren einem, der Beschickungsstation (4) folgenden, die Backgutträger (6) nach oben angehoben werden, wogegen im anderen Stapel (11) die Backgutträger (6) abgesenkt werden, daß diese Stapel (10, 11) an zwei einander gegenüberliegenden Seiten von vertikalen Heißluftkanälen (15, 16) begleitet sind, denen über das Ventilsystem (52) Heißluft zugeführt wird, und daß für den die Backgutträger (6) anhebenden Stapel (10) zumindest zwei voneinander getrennte Abschnitte der Heißluftkanäle (15, 16) übereinander angeordnet sind, für deren jeden gesonderte Zufuhrkanäle (26) und Abführkanäle (33) für die Luft vorhanden sind, in welche das Ventilsystem (52) eingebaut ist.

9. Backofen nach Anspruch 8, dadurch gekennzeichnet daß die Zufuhrkanäle (26) und Abfuhrkanäle (33) und in sie eingebaute schwenkbare Klappen (31, 56) an der Rückwand (27) des Backraumes (9) angeordnet und von seitlich an den Backofen angebauten Gebläsen (24, 37) und Heizregistern (23, 38) mit Heißluft versorgt sind.

10. Backofen nach Anspruch 8 oder 9. dadurch gekennzeichnet, daß die der Beschickungsöffnung (50) benachbarte Zone (19) sich über etwa ein Drittel der Höhe des Stapels (10) erstreckt.

11. Backofen nach einem der Ansprüche 8 bis 10, dadurch gekennzeichnet, daß die Heißluftkanäle (15, 16) zu beiden Seiten jedes Stapels (10, 11) auf jeder Stufe desselben Öffnungen (17, 17') für den Luftaustritt aufweisen, wobei das Ventilsystem (52) den Heißluftzustrom zu den auf den beiden Seiten liegenden Heißluftkanälen (15, 16) jedes Stapels (10, 11) alternierend freigibt.

12. Backofen nach einem der Ansprüche 8 bis 11, dadurch gekennzeichnet, daß die Heißluftkanäle (15, 16) zu beiden Seiten jedes Stapels (10, 11) Öffnungen (17, 17') für den Luftaustritt aufweisen, die auf beiden Seiten relativ zueinander um jeweils eine Stufe des Stapels (10, 11) versetzt sind, wobei das Ventilsystem (52) den Heißluftzustrom zu den auf beiden Seiten liegenden Heißluftkanälen (15, 16) gleichzeitig freigibt.

## Claims

1. Baking oven comprising a housing (8) with a supply opening (50) for supplying the baking compartment (9) of the baking oven with baking good, and with a delivery opening (51) for taking off the finished baken baking good which within the baking compartment (9) is guided on baking good carriers (6) within a baking atmosphere along a path disposed within the housing (8), which path forms a closed circuit, and wherein along the path hot air is blown through openings (17, 17') of hot air channels (15, 16) in alternating directions onto the baking good, which hot air channels at least along sections follow the path, and wherein the path has two subsequent zones (19, 20) in which different temperatures can be adjusted by two heatings (23, 38), characterised in that hot air channels for two hot air circuits (21, 22) for blowing onto the baking good in alternating direction are connected to the two heatings (23, 38), the one hot air circuit (22) being associated to both zones (19, 20), whereas the other hot air circuit (21) is associated only to the zone (19) following the supply opening (50) and can be switched to short circuit operation by a valve system (52).

2. Baking oven according to claim 1, characterised in that the hot air circuit (22) associated to both zones (19, 20) can be coupled by the valve system (52) to the hot air channels (15) of the zone (19) following the supply opening (50).

3. Baking oven according to claim 2, characterised in that the valve system (52) is at least partially constituted by a switching system (29) for changing the blowing direction.

4. Baking oven according to one of the claims 1 to 3, characterised in that at least one of the two heatings (23, 38) has an adjustable heating capacity.

5. Baking oven according to one of the claims 2 to 4, characterised in that the hot air channels (15) of the hot air circuit (21) for the zone (19) following the supply opening (50) are disposed adjacent to the hot air channels (16) of the hot air circuit (22) for the other zone (20) and can be connected to the last named channels (16) by valves (53).

6. Baking oven according to claim 5, characterised in that the valves (53) are constituted by swivelable flaps (31, 56), which are adjustable by at least one servomotor (32).

7. Baking oven according to one of the claims 1 to 6, characterised in that the valve system (52) of the hot air channels (15) for the zone following the supply opening (50) comprises swivelable flaps (31, 56) which in the one end position allow the air flowing into this hot air channel (15), in the other end position shut off this flow and form a short circuit for the hot air supply so that the hot air flows back to the heating (23) by-passing the baking good carriers (6).

8. Baking oven according to one of the claims 1 to 7, characterised in that the path guides the baking good carriers (6) in two stacks (10, 11) disposed side by side, in the one of which following the supply station (4) the baking good carriers (6) are lifted upwards, whereas in the other stack (11) the baking good carriers (6) are lowered, that these stacks (10, 11) are followed by vertical hot air channels (15, 16) at two opposing sides, hot air being supplied to these channels via the valve system (52), and that for the stack (10) lifting the baking good carriers (6) at least two sections of the hot air channels (15, 16) separated from each other are disposed one above the other, for each section separate supply channels (26) and draw-off channels (33) for the air are provided into which the valve system (52) is inserted.

9. Baking oven according to claim 8, characterised in that the supply channels (26) and the draw-off channels (33) and swivelable flaps (31, 56) inserted into them are disposed at the back wall (27) of the baking compartment (9) and are furnished with hot air by blowers (24, 37) and heating registers (23, 38) connected to the side of the baking oven.

10. Baking oven according to claim 8 or 9, characterised in that the zone (19) neighbouring the supply opening (50) extends over about a third of the height of the stack (10).

11. Baking oven according to one of the claims 8 to 10, characterised in that the hot air channels (15, 16) have openings (17, 17') for the escape of air on both sides of each stack (10, 11) at each step thereof, whereby the valve system (52) alternatively allows the hot air flowing to the hot air channels (15, 16) of each stack (10, 11) disposed at the two sides.

12. Baking oven according to one of the claims 8 to 11, characterised in that the hot air channels (15, 16) have openings (17, 17') for the escape of air at both sides of each stack (10, 11), which openings are staggered on both sides relativ to each other for a step of the stack (10, 11) each, wherein the valve system (52) allows the hot air flowing simultaneously to the hot air channels (15, 16) disposed at the two sides.

## Revendications

1. Four de boulanger comprenant une carcasse (8) avec une ouverture de chargement (50) pour charger de la matière à cuire dans l'espace (9) du four, et avec une ouverture de sortie (51) pour la prise de la matière à cuire finie, qui est guidée dans l'espace (9) du four sur des porteurs de matière à cuire (6) dans une atmosphère cuisante le long d'une voie disposée dans la carcasse (8) et formant un circuit fermé, la matière à cuire étant soufflée d'air chaud le long de la voie des directions alternantes des ouvertures (17, 17') des conduits d'air chaud (15, 16), qui accompagnent la voie au moins partiellement, ladite voie comprenant deux zones (19, 20) successives, dans lesquelles des températures différentes peuvent être ajustées par deux moyens de chauffage (23, 38), caractérisé en ce que des conduits d'air chaud de deux circuits d'air chaud (21, 22) sont raccordés aux deux moyens de chauffage (23, 38) pour souffler la matière à cuire en sens alternants, l'un des circuits d'air chaud (22) étant associé à tout les deux zones (19, 20), tandis que l'autre circuit d'air chaud (21) est associé seulement à la zone (19), qui suive l'ouverture de chargement (50), et peut être changé à un régime en court-circuit par un système de soupape (52).

2. Four de boulanger selon la revendication 1, caractérisé en ce que le circuit d'air chaud (22) associé aux deux zones (19, 20) est susceptible d'être accouplé par le système de soupape (52) aux conduits d'air chaud (15) de la zone (19), qui suive l'ouverture de chargement (50).

3. Four de boulanger selon la revendication 2, caractérisé en ce-que le système de soupape (52) est formé au moins partiellement d'un système de renversement (29) pour changer la direction de soufflage.

4. Four de boulanger selon une des revendications 1 à 3, caractérisé en ce qu'au moins un des deux moyens de chauffage (23, 38) est d'une puissance de chauffage susceptible d'être ajustée.

5. Four de boulanger selon une des revendications 2 à 4, caractérisé en ce que les conduits d'air chaud (15) du circuit d'air chaud (21) de la zone (19), qui suive l'ouverture de chargement (50), sont disposés conjointement aux conduits d'air chaud (16) du circuit d'air chaud (22) de l'autre zone (20) et sont susceptible d'être connectés aux dites conduits (16) par des soupapes (53).

6. Four de boulanger selon la revendication 5, caractérisé en ce que les soupapes (53) sont formés par des clapets (31, 56) pivotants, qui sont ajustés par au moins un servomoteur (32).

7. Four de boulanger selon une des revendications 1 à 6, caractérisé en ce que le système de soupape (52) des conduits (15) d'air chaud de la zone (19) , qui suive l'ouverture de chargement (50), comprends des clapets (31, 56) pivotants associés, qui débloquent le courant d'air par ce conduit d'air chaud (15) dans l'une de ses positions extrêmes et le bloquent dans l'autre et forment un court-circuit de l'alimentation d'air chaud de manière que l'air chaud reflue aux moyens de chauffage (23) tournant les porteurs de matière à cuire (6).

8. Four de boulanger selon une des revendications 1 à 7, caractérisé en ce que la voie guide les porteurs de matière à cuire (6) en forme de deux piles (10, 11) juxtaposées, les porteurs de matière à cuire (6) étant levés en haut dans l'une de lesquelles, qui suive la station de chargement (4), tandis que les porteurs de matière à cuire (6) sont abaissés dans l'autre pile (11), en ce que ces piles (10, 11) sont accompagnées aux deux côtés opposées des conduits d'air chaud (15, 16) verticaux, qui sont alimentés d'air chaud par le système de soupape (52), et en ce qu'au moins deux parties séparées des conduits d'air chaud (15, 16) pour ladite pile (10), qui lève les porteurs de matière à cuire (6), sont superposées, des conduits d'alimentation (26) en air et des conduits de fuite (33) séparés étant prévues pour chacun des lesquelles, dans lesquelles le système de soupape (52) est installé.

9. Four de boulanger selon la revendication 8, caractérisé en ce que les conduits d'alimentation (26) et les conduits de fuite (33) et des clapets (31, 56) pivotants installés dans ceux-ci sont disposés à la paroi arrière (27) de l'espace (9) du four et sont alimentés en air chaud par des ventilateurs (24, 37) et des registres de chauffage (23, 38) montés latéralement aux four de boulanger.

10. Four de boulanger selon la revendication 8 ou 9, caractérisé en ce que la zone (19) voisine à l'ouverture de chargement (50), s'étend sur environ un tiers de la hauteur de la pile (10).

11. Four de boulanger selon une des revendications 8 à 10, caractérisé en ce que les conduits d'air chaud (15, 16) comprennent des ouvertures (17, 17') pour la sortie d'air aux deux côtés de chaque pile (10, 11) et à chaque étage de celui-ci, le système des soupape (52) débloquant l'alimentation en courant d'air chaud tour à tour aux conduits d'air chaud (15, 16) disposés aux deux côtés de chaque pile (10, 11).

12. Four de boulanger selon une des revendications 8 à 11, caractérisé en ce que les conduits d'air chaud (15, 16) comprennent des ouvertures (17, 17') pour la sortie d'air aux deux côtés de chaque pile (10, 11), qui sont décalées relativement l'une à l'autre chacune par une étage de la pile (10, 11), le système des soupape (52) débloquant l'alimentation en courant d'air chaud simultanément aux conduits d'air chaud (15, 16) de chaque pile (10, 11) disposés aux deux côtés.
